(19) Europäisches Patentamt
European Patent Office
Office européen des brevets

(11) **EP 3 699 665 A1**

(12) **EUROPEAN PATENT APPLICATION**
published in accordance with Art. 153(4) EPC

(43) Date of publication:
**26.08.2020 Bulletin 2020/35**

(21) Application number: **19745959.7**

(22) Date of filing: **24.01.2019**

(51) Int Cl.:
*G02B 13/18* (2006.01)    *G02B 13/00* (2006.01)
*G02B 27/00* (2006.01)    *G03B 17/56* (2006.01)

(86) International application number:
**PCT/CN2019/072901**

(87) International publication number:
**WO 2020/133619 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2018 CN 201811617578**

(71) Applicant: **Guangdong Sirui Optical Co., Ltd Zhongshan, Guangdong 528458 (CN)**

(72) Inventors:
• **WU, Wei**
  **Zhongshan, Guangdong 528458 (CN)**
• **LI, Jie**
  **Zhongshan, Guangdong 528458 (CN)**

(74) Representative: **Lavoix**
**Bayerstrasse 83**
**80335 München (DE)**

(54) **EXTERNAL LENS FOR MOBILE TERMINAL**

(57)    The present invention provides an external lens for a mobile terminal, comprising a first lens group and a second lens group composed of cylindrical lenses arranged from an object side to an image side, wherein, the focal power of the first lens group in an X direction is less than zero, the focal power of the second lens group in the X direction is greater than zero; and the focal power of the external lens in a Y direction is zero. In such a way, it is able to increase the horizontal field-of-view angle of the camera of a mobile terminal without changing the vertical one thereof, by taking advantages of optical properties specific to the cylindrical lens; through processing by professional post-processing software (FILMIC PRO), it can realize the function of the mobile terminal to take wide-picture-ratio film videos, while ensuring image quality thereof without trimming or with minor trimming.

FIG. 1

**Description**

**TECHNICAL FIELD**

The present invention relates to the technical field of mobile terminal photography accessories, in particular to an external lens for a mobile terminal.

**BACKGROUND**

With the development of mobile internet technology, the mobile phone has become a daily necessity. The recent years have seen improvement in the camera performance of mobile terminals such as, mobile phones with even more powerful functions, thus the mobile phone has become the first choice for the mass public as a photography tool in gradual replacement of ordinary digital cameras. And due to the increasingly powerful video shooting function, a growing number of users are trying to use their mobile phones to shoot films and television works, such as professional short films, micro-movies with a wide picture ratio (1.85:1, 2.39:1, etc.).

However, the common display ratio of a mobile terminal, such as a mobile phone and a tablet computer on the market, is 16:9, the same as the picture ratio of directly taken videos or short films, and wide-picture-ratio videos are not directly available. In the prior art, a common practice is to trim the pictures using a software for conversion, when it is necessary to make videos with a wide picture ratio. However, the trimmed video has a smaller horizontal field-of-view angle, leading to a reduction in vertical field-of-view contents, lowered definition, and damage to picture quality, thus undermining the quality of the videos.

Therefore, how to ensure the quality and field-of-view angle of videos when shooting wide-picture-ratio videos using mobile phones and other mobile terminals has become a technical problem to be solved at present.

**SUMMARY**

Therefore, the technical problem to be solved by the present invention is to overcome the deficiencies such as a small horizontal field-of-view angle, reduced contents of vertical field-of-view angle, lowered definition and damaged image quality in the prior art when mobile phones and other mobile terminals are used to shoot wide-picture-ratio videos, so as to provide an external lens for a mobile terminal.

The external lens for a mobile terminal provided by the present invention includes a first lens group and a second lens group composed of cylindrical lenses arranged from an object side to an image side; wherein, the focal power of the first lens group in an X direction is less than zero, the focal power of the second lens group in the X direction is greater than zero; and the focal power of the external lens in a Y direction is zero.

Optionally, the external lens comprises two cylindrical lenses, including a first lens and a second lens; the first lens group comprises the first lens, and the second lens group comprises the second lens.

Optionally, the first lens is a plano-concave cylindrical lens with negative focal power; and/or, the second lens is a meniscus cylindrical lens with positive focal power.

Optionally, the external lens comprises three cylindrical lenses, including a first lens, a second lens and a third lens; the first lens group comprises the first lens, and the second lens group comprises the second lens and the third lens glued together.

Optionally, the first lens group and the second lens group satisfy the following conditions:

$$-0.85 < f_1/f_2 < -0.70,$$

wherein $f_1$ is a focal distance of the first lens group in the X direction, and $f_2$ is a focal distance of the second lens group in the X direction.

Optionally, the first lens group is made of a material with a low refractive index and a high Abbe number; the second lens group is made of a material with a high refractive index and a low Abbe number.

Optionally, the first lens group satisfies the following conditions:

$$1.48 < Nd < 1.74,\ 52 < Vd < 72;$$

Nd is a d light refractive index, and Vd is an Abbe number; and/or,
the second lens group satisfies the following conditions:

$$1.7 < Nd < 1.95, \ 16 < Vd < 30;$$

Nd is a d light refractive index, and Vd is an Abbe number.

Optionally, the cylindrical lens is a square axisymmetric structure, and the maximum cylindrical lens of the external lens has a length <26mm, a width <24mm.

Optionally, the external lens includes a cylindrical lens body for the cylindrical lens to be arranged thereon, the lens body has a TTL<17.0mm and a maximum outer diameter <38mm.

Optionally, the mobile terminal is a mobile phone having a rear camera used in cooperation with the external lens.

Optionally, the external lens includes an installation structure mounted on the mobile phone and a lens body detachably mounted on the installation structure; at least two cylindrical lenses are arranged on the lens body.

The technical solutions of the present invention has the following advantages:

1. The external lens for a mobile terminal provided by the present invention includes a first lens group and a second lens group composed of cylindrical lenses arranged from an object side to an image side, the focal power of the first lens group in an X direction is less than zero, the focal power of the second lens group in the X direction is greater than zero; and the focal power of the external lens in a Y direction is zero. In such a way, it is possible to increase the horizontal field-of-view angle of the camera of a mobile terminal without changing the vertical one thereof, by taking advantages of optical properties specific to the cylindrical lens; the first lens group is used to adjust light entering the external lens, mainly intended to increase the angle of the light entering in a horizontal direction; the second lens group is used to adjust the light, ensuring that the light entering the camera of a mobile terminal after emission out of the external lens is basically the same as the incident light of the mobile terminal when the mobile terminal takes photographs alone, for instance, no vignetting, or with a definition the same as that of the mobile terminal itself. Through processing by professional post-processing software (such as the FILMIC PRO), it can realize the function of the mobile terminal to take wide-picture-ratio film videos, while ensuring image quality thereof without trimming or with minor trimming.

2. In the external lens for a mobile terminal provided by the present invention, the first lens and the second lens satisfy the following conditions: - $0.85 < f_1/f_2 < -0.70$, wherein $f_1$ is a focal distance of the first lens group in the X direction, and $f_2$ is a focal distance of the second lens group in the X direction. The horizontal field-of-view angle of the camera of the mobile terminal can be increased by 33% by adoption of the first lens and second lens with the above focal distance ratio, while the vertical field-of-view angle remains the same; when used in cooperation with a mobile terminal with a shooting ratio of 16:9, the external lens enables the mobile terminal to take film videos with a picture ratio of 2.39:1 through processing by professional post-processing software (FILMIC PRO, etc.) without trimming, thereby guaranteeing the horizontal field-of-view angle and image quality of the video.

**BRIEF DESCRIPTION OF THE DRAWINGS**

In order to make a clearer description of technical solutions in specific implementations of the present invention or prior art, drawings involved in description for the specific implementations or the prior art will be briefly introduced, and apparently, the drawings described below illustrate some implementations of the present invention, for one with ordinary skill in the art, other drawings can also be obtained in accordance with these drawings without delivering creative efforts.

FIG. 1 is a diagram for the optical structure for an external lens for a mobile terminal provided in a first implementation of the present invention;

FIG. 2 is a vertical-axis color difference graph for an embodiment of the external lens for a mobile terminal provided by the present invention;

FIG. 3 is a relative optical illuminance graph in the vertical direction for an embodiment of the external lens for a mobile terminal provided by the present invention;

FIG. 4 is a relative optical illuminance graph in the horizontal direction for an embodiment of the external lens for a mobile terminal provided by the present invention;

FIG. 5 is a MTF diagram in the vertical direction for an embodiment of the external lens for a mobile terminal provided by the present invention;

FIG. 6 is a MTF diagram in the horizontal direction for an embodiment of the external lens for a mobile terminal provided by the present invention.

Description of reference signs in the drawings:

1- first lens, 2- second lens.

a: Airy disk, b: 0.4861 $\mu$m, c: 0.5460 $\mu$m, d: 0.4360 $\mu$m, e: 0.5876 $\mu$m, f: 0.6563 $\mu$m.

## DETAILED DESCRIPTION

Technical solutions of the present invention will be described clearly and completely as follows in conjunction with the drawings, apparently, the described embodiments are just part rather than all embodiments of the present invention. Based on the embodiments in the present invention, all other embodiments obtained by one with ordinary skill in the art without delivering creative efforts shall fall into the protection scope of the present invention.

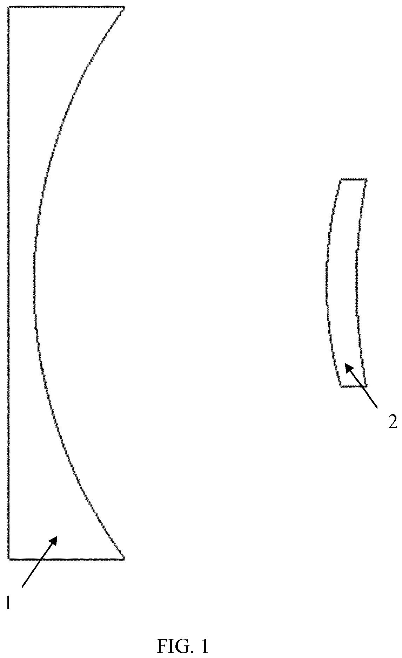

FIG. 1 shows an embodiment for an external lens for a mobile terminal provided by the present invention.

As shown in FIG. 1, the external lens adopts 2 cylindrical lenses optically designed as 2 pieces in 2 groups, including a first lens group and a second lens group composed of cylindrical lenses arranged from an object side to an image side. The first lens group includes a first lens 1, the second lens group includes a second lens 2. The first lens 1 is a plano-concave cylindrical lens with negative focal power. The second lens 2 is a meniscus cylindrical lens with positive focal power. The focal power of both the first lens group and the second lens group in a Y direction is 0, and the focal distance of the first lens group and the second lens group in an X direction have the following relations:

$-0.85 < f_1/f_2 < -0.70$,

wherein $f_1$ is a focal distance of the first lens group in the X direction, and $f_2$ is a focal distance of the second lens group in the X direction.

In this embodiment, $f_1$ is the focal distance of the first lens in the X (arc vector) direction, $f_2$ is the focal distance of the second lens in the X (arc vector) direction.

The external lens for a mobile terminal provided by the present invention is used in cooperation with a camera of the mobile terminal with a shooting ratio of 16:9. The horizontal field-of-view angle of the camera can be increased by 33% while the vertical field-of-view angle remains the same by taking advantage of the optical properties specific to a cylindrical lens. The first lens group is used to adjust light entering the external lens, mainly for increasing the angle of the light entering in a horizontal direction, i.e., increasing the horizontal field-of-view angle in this embodiment by 33%; the second lens group is used to adjust the light, ensuring that the light entering the camera of a mobile terminal after emission out of the external lens is substantially the same as the incident light of the mobile terminal when the mobile terminal takes photographs alone, for instance, no vignetting, or with a definition the same as that of the mobile terminal itself.

However, the mobile terminal stores the horizontal field-of-view at a ratio of 16: 9 after compression thereof, hence post-processing software such as FILMIC PRO, etc. is used to restore the compressed contents while correcting distortion, so that a user can take wide-screen film videos with a picture ratio of 2.39: 1 using a mobile terminal with a shooting ratio of 16:9, which requires no trimming and guarantees the image quality of the videos as well.

By using the external lens for a mobile terminal provided by the present invention, the increment in the horizontal field-of-view angle is not limited to 33%, and when it is less than 33%, post-processing software can also be employed to restore the compressed contents and correct the distortion, and perform trimming to produce wide-screen film videos of 2.39:1 at the same time; compared with the prior art, the horizontal field-of-view angle is increased, and less contents suffers a loss during the trimming due to minor trimming of the vertical field of view, thus image quality of the videos is guaranteed during the photographing of the wide-picture-ratio videos.

The external lens for a mobile terminal provided by the present invention is not limited to taking videos with a picture ratio of 2.39:1, the horizontal field-of-view angle can also be adjusted through adjustment of the relationship of the focal distances in the X direction between the first lens group and the second lens group, so as to change the shooting ratio to suit different application scenarios. For example, by increasing the horizontal field-of-view angle by about 5%, the external lens can enable users to shoot wide-screen film videos with a picture ratio of 1.85: 1 using a mobile terminal with a shooting ratio of 16:9 without trimming, while ensuring the image quality of the video.

The external lens for a mobile terminal provided by the present invention is not limited to being used in cooperation with the camera of a mobile terminal with a shooting ratio of 16:9, and when used along with the camera of a mobile terminal with other shooting ratios, it can also take wide-picture-ratio videos under the same principle by increasing the horizontal field-of-view angle without trimming or with minor trimming, while guaranteeing the horizontal field-of-view angle and image quality of the video.

It is able to reduce the structure dimension on the premise of satisfying the requirements for the optical properties such as focal power, definition, color rendition, so as to ensure the portability of the whole external lens, by using a plano-concave cylindrical lens as the first lens 1 and using a meniscus cylindrical lens as the second lens 2 can.

But the first lens 1, not limited to a plano-concave cylindrical lens, can be other types of negative focal power cylindrical lens. And instead of being limited to the meniscus cylindrical lens in this embodiment, the second lens 2 can be a double-convex lens or a plano-convex cylindrical lens with positive focal power.

The first lens 1 in the first lens group is made of a material with a low refractive index and a high Abbe number. The second lens 2 in the second lens group is made of a material with a high refractive index and a low Abbe number. Generally speaking, the larger the refractive index of the medium is, the stronger the chromatic dispersion is, and the smaller the Abbe number is, vice versa. Usually a material with an Abbe number $Vd>50$ is referred to as a high Abbe number material, while a material with $Vd<40$ is a low Abbe number material. Taking materials from *CHENG DU GUANG MING* as an example: H-QK3L, H-FK61 and H-LaF1 are common materials with a high Abbe number and a low refractive index, and H-ZLaF41a, H-ZF88, etc. are typical materials with a high refractive index and a low Abbe number.

In the external lens for a mobile terminal provided by the present invention, the d light refractive index Nd and Abbe number Vd of the first lens 1 satisfy the following conditions: $1.48<Nd<1.74$, $52<Vd<72$. The d light refractive index Nd and Abbe number Vd of the first lens 2 satisfy the following conditions: $1.7<Nd<1.95$, $16<Vd<30$. Such a design can guarantee the color rendition of a video taken by a mobile terminal which is externally connected with the external lens provided in the present invention.

In the external lens for a mobile terminal provided by the present invention, both the first lens 1 and the second lens 2 are a cylindrical lens, a square axisymmetric lens with a square front projection in a direction perpendicular to its operation direction, the cylindrical lens in this embodiment has a maximum length <26mm, a width <24mm, thereby the size and specification of the final product contribute to portability of external lens.

The first lens 1 and the second lens 2 are mounted on a cylindrical shell, which is assembled along with the first lens 1 and the second lens 2 into a final product called a lens body, the TTL (Total Track Length) of which is smaller than 17mm, and the maximum outer diameter of which is smaller than 38mm, thus the external lens is small and portable enough to be carried around by a user.

The external lens for a mobile terminal provided by the present invention is not limited to the optical structure of the cylindrical lens of the first lens 1 and the second lens 2, and can adopt more than two cylindrical lenses. For instance, an optical design of three pieces in two groups can be adopted, including a first lens group and a second lens group sequentially arranged from the object side to the image side. The first lens group includes a first lens, the second lens group includes a second lens and a third lens glued together. All of the first lens, the second lens and the third lens are a cylindrical lens, among which the focal power of the external lens in the Y direction is zero, the focal power of the first lens group in the X direction is smaller than zero, and the focal power of the second lens group in the X direction is greater than zero, the other arrangements are the same as those in the above embodiments. The external lens provided by the present invention can also be a combination of more lenses, as long as it satisfies the requirements for design of the first lens group and the second lens group described in the above embodiments, but out of overall consideration of factor like weight, volume, cost, etc., two cylindrical lenses are the optimum implementation.

In this embodiment, the mobile terminal is a mobile phone, and the external lens is used in cooperation with a rear camera thereof. The external lens includes an installation structure mounted on the mobile phone, for a lens body to be detachably mounted thereon. In this embodiment, the installation structure is a mobile phone shell matched with the mobile phone, the lens body is mounted on the mobile phone via a thread structure. Obviously, the lens body can be detachably fitted with the mobile phone shell via a straight line slide fastener, a rotating buckle and magnetic suction. The installation structure can also be a shell structure that partially fits the mobile phone or wraps one end thereof, or an elastic clip clamped to the mobile phone.

Regarding the external lens for a mobile terminal provided by the present invention, its optical and size designs, besides being optimized relative to the CMOS chip size of an Apple mobile phone, are also optimized relative to the mainstream Android mobile phones (such as Huawei, Samsung, Xiaomi, OPPO, VIVO, etc., so that they are suitable for a variety of mobile phones, ensuring the compatibility of the external lens.

Obviously, the external lens can be used in a front camera of the mobile phone, as well as mobile terminals such as tablets, motion cameras, etc.

The present invention provides an external lens for a mobile terminal, an example of specific optical design of which is given, with the specific parameters as follows:

| Lens | Surface type | X radius (mm) | Y radius | Thickness (mm) | Material |
|---|---|---|---|---|---|
| First lens | Cylindrical | Infinitely great | Infinitely great | 1.300 | H-QK3L |
|  | Cylindrical | 20.250 | Infinitely great | 12.720 |  |
| Second lens | Cylindrical | 16.510 | Infinitely great | 1.500 | H-ZF52A |

(continued)

| Lens | Surface type | X radius (mm) | Y radius | Thickness (mm) | Material |
|---|---|---|---|---|---|
| | Cylindrical | 24.920 | Infinitely great | | |

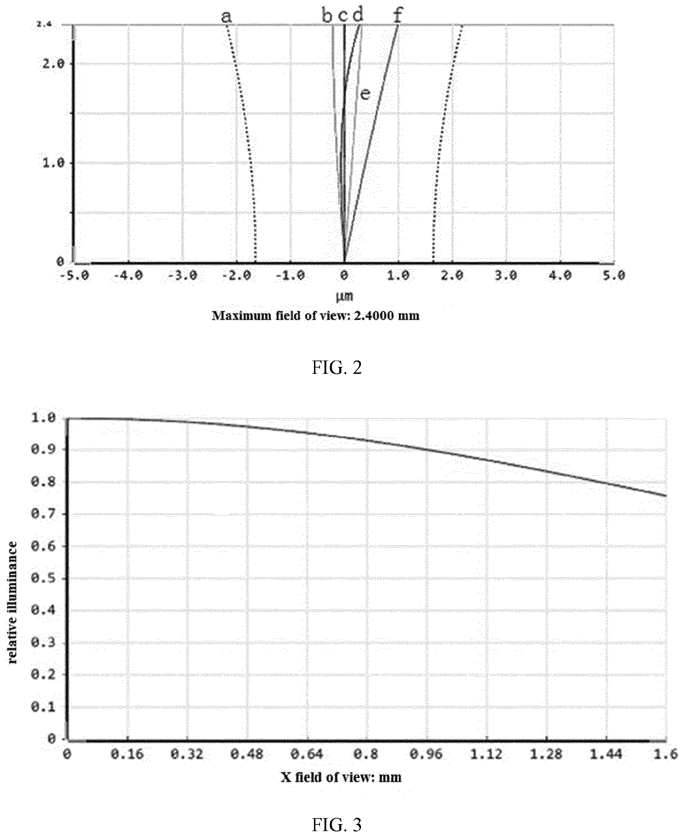

Optical tests of the above embodiment are carried out, with the test results shown in FIG. 2 to FIG. 6.

FIG. 2 is vertical-axis color difference graph, from which it can be seen that the vertical axis color difference of the external lens is less than 1.5 $\mu$m by strict color difference correction, thus ensuring the color rendition of videos taken by a mobile phone after using the external lens provided by the present invention.

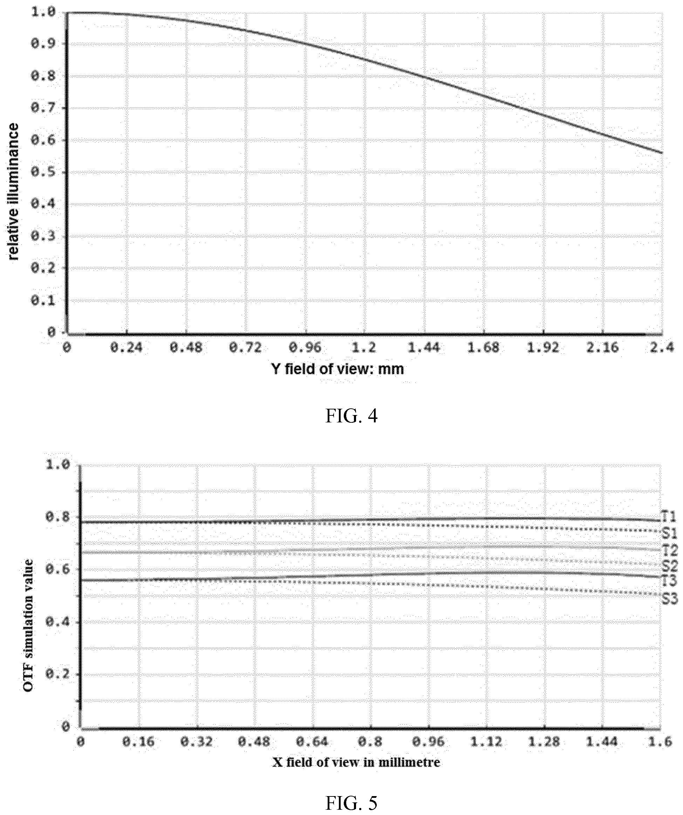

FIG. 3 and FIG. 4 are relative optical illuminance graphs, from which it can be seen that by optimizing the optical structure parameters, the relative optical illuminance on the farthest edge of the external lens in the horizontal direction is more than 58%, and that the relative optical illuminance on the farthest edge in the vertical direction is more than 75%, so as to ensure the brightness balance of videos taken by a mobile phone after using the external lens provided by the present invention.

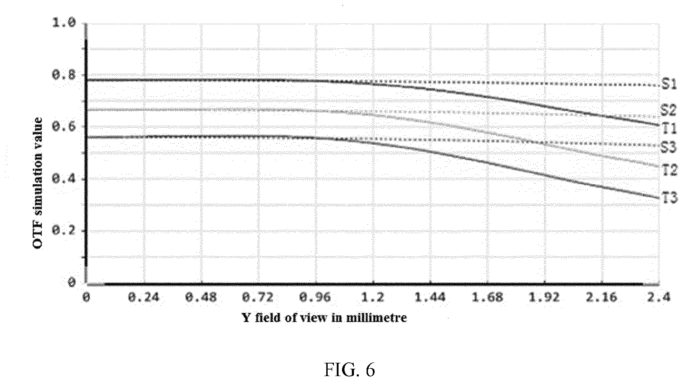

FIG. 5 and FIG. 6 are MTF image quality graphs. From the horizontal and vertical MTF image resolution-simulation graphs, it can be seen that the external lens has excellent image resolution quality by strictly correcting all kinds of optical aberrations, so as to ensure the definition of videos taken by a mobile phone after using the external lens provided by the present invention.

Through the above tests, it can be seen that the mobile phone after using the external lens provided by the present invention has very good optical imaging quality, wherein the definition and color rendition of the videos experience no reduction when the shooting ratio of the mobile phone is expanded to change optical properties thereof.

Obviously, the above embodiments are merely intended to clearly illustrate rather than limit the numerated implementations. For one with ordinary skill in the art, other different forms of modifications or changes may further be made on the basis of the aforementioned descriptions. It is unnecessary and impossible to exhaust all implementations. And modifications or changes derived herefrom obviously fall into the protection scope of the present invention.

## Claims

1. An external lens for a mobile terminal, **characterized in** comprising a first lens group and a second lens group composed of cylindrical lenses arranged from an object side to an image side;
   wherein, the focal power of the first lens group in an X direction is less than zero, the focal power of the second lens group in the X direction is greater than zero; and the focal power of the external lens in a Y direction is zero.

2. The external lens in accordance with claim 1, **characterized in** comprising two cylindrical lenses, including a first lens (1) and a second lens (2);
   wherein, the first lens group comprises the first lens (1), and the second lens group comprises the second lens (2).

3. The external lens in accordance with claim 2, **characterized in that**: the first lens (1) is a plano-concave cylindrical lens with negative focal power; and/or, the second lens (2) is a meniscus cylindrical lens with positive focal power.

4. The external lens in accordance with claim 1, **characterized in** comprising three cylindrical lenses including a first lens, a second lens and a third lens;
   wherein, the first lens group comprises the first lens, the second lens group comprises the second lens and the third lens glued together.

5. The external lens in accordance with any of claims 1-4, **characterized in that**: the first lens group and the second lens group satisfy the following conditions:
   $-0.85 < f_1/f_2 < -0.70$,
   wherein $f_1$ is a focal distance of the first lens group in the X direction, and $f_2$ is a focal distance of the second lens group in the X direction.

6. The external lens in accordance with any of claims 1-5, **characterized in that**: the first lens group is made of a material with a low refractive index and a high Abbe number; the second lens group is made of a material with a high refractive index and a low Abbe number.

7. The external lens in accordance with any of claims 1-6, **characterized in that**: the first lens group satisfies the following conditions:

$$1.48 < Nd < 1.74,\ 52 < Vd < 72;$$

Nd is a d light refractive index, and Vd is an Abbe number; and/or,
the second lens group satisfies the following conditions:

$$1.7 < Nd < 1.95,\ 16 < Vd < 30;$$

Nd is a d light refractive index, and Vd is an Abbe number.

8. The external lens in accordance with any of claims 1-7, **characterized in that**: the cylindrical lens is with a square axisymmetric structure, and the maximum cylindrical lens of the external lens has a length <26mm and a width <24mm.

9. The external lens in accordance with claim 8, **characterized in that**: the external lens comprises a cylindrical lens body for the cylindrical lens to be arranged thereon, the lens body has a TTL<17.0mm and a maximum outer diameter <38mm.

10. The external lens in accordance with any of claims 1-9, **characterized in that**: the mobile terminal is a mobile phone having a rear camera used in cooperation with the external lens.

11. The external lens in accordance with claim 10, **characterized in** comprising an installation structure mounted on the mobile phone and a lens body detachably mounted on the installation structure; at least two cylindrical lenses are arranged on the lens body.

FIG. 1

FIG. 2

FIG. 3

FIG. 4

FIG. 5

FIG. 6

## INTERNATIONAL SEARCH REPORT

| | |
|---|---|
| International application No. | |
| | **PCT/CN2019/072901** |

| A. | CLASSIFICATION OF SUBJECT MATTER |
|---|---|

G02B 13/18(2006.01)i;  G02B 13/00(2006.01)i;  G02B 27/00(2006.01)i

According to International Patent Classification (IPC) or to both national classification and IPC

| B. | FIELDS SEARCHED |
|---|---|

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT, EPODOC, WPI, CNKI: 广州思锐光学股份有限公司, 吴伟, 李杰, 镜头, 手机, 移动终端, 柱面镜, 镜片, 透镜, 光焦度, 屈光度, 焦距, 折射率; lens, mobile, handset, telephone, terminal, lenticular, cylindrical, plano-concave, diopter, focus, refractive, index

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104049369 A (QINGDAO GOERTEK TECHNOLOGY CO., LTD.) 17 September 2014 (2014-09-17) <br> description, paragraphs [0030]-[0048], and figures 1-7 | 1-11 |
| X | CN 206209198 U (ZHANG, JIANPING) 31 May 2017 (2017-05-31) <br> description, paragraphs [0020]-[0024], and figures 1-3 | 1-11 |
| X | CN 106501943 A (BEIJING HISPOT TECHNOLOGY CO., LTD.) 15 March 2017 (2017-03-15) <br> description, paragraphs [0014]-[0058], and figures 1-2 | 1-11 |
| X | CN 207301485 U (BEIJING HISPOT TECHNOLOGY CO., LTD.) 01 May 2018 (2018-05-01) <br> description, paragraphs [0033]-[0069], and figures 1-2 | 1-11 |
| A | US 2009028546 A1 (SHIN, J.K.) 29 January 2009 (2009-01-29) <br> entire document | 1-11 |

| ☐ Further documents are listed in the continuation of Box C. | ✔ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2019** | **09 October 2019** |

| Name and mailing address of the ISA/CN | Authorized officer |
|---|---|
| **China National Intellectual Property Administration** <br> **No. 6, Xitucheng Road, Jimenqiao Haidian District, Beijing** <br> **100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/072901**

| Patent document cited in search report | | | Publication date (day/month/year) | Patent family member(s) | | | Publication date (day/month/year) |
|---|---|---|---|---|---|---|---|
| CN | 104049369 | A | 17 September 2014 | CN | 104049369 | B | 07 September 2016 |
| CN | 206209198 | U | 31 May 2017 | None | | | |
| CN | 106501943 | A | 15 March 2017 | CN | 106501943 | B | 01 March 2019 |
| CN | 207301485 | U | 01 May 2018 | None | | | |
| US | 2009028546 | A1 | 29 January 2009 | KR | 20090011834 | A | 02 February 2009 |
| | | | | US | 7997811 | B2 | 16 August 2011 |

Form PCT/ISA/210 (patent family annex) (January 2015)